# EUROPÄISCHE PATENTSCHRIFT

(11) **EP 2 066 753 B1**
(45) Veröffentlichungstag und Bekanntmachung des Hinweises auf die Patenterteilung: **14.11.2012**
(21) Anmeldenummer: 07788308.0
(22) Anmeldetag: 08.08.2007
(51) Int. Cl.: C09B 67/08, B41M 1/00, C09B 67/20

(54) **POLYISOBUTENDERIVATE UND NICHTIONISCHE OBERFLÄCHENAKTIVE ADDITIVE ENTHALTENDE PIGMENTZUBEREITUNGEN**
PIGMENT PREPARATIONS COMPRISING POLYISOBUTENE DERIVATIVES AND NONIONIC SURFACE-ACTIVE ADDITIVES
COMPOSITIONS DE PIGMENT CONTENANT UN DÉRIVÉ DE POLYISOBUTÈNE ET UN ADDITIF TENSIOACTIF NON IONIQUE

(30) Priorität: 25.08.2006 EP 06119519
(43) Veröffentlichungstag der Anmeldung: 10.06.2009
(73) Patentinhaber: BASF SE, 67056 Ludwigshafen (DE)
(72) Erfinder: LÖBEL, Johannes, 68165 Mannheim (DE); MADLA, Peter, 67591 Mörstadt (DE); MERCY, Jacques, 68165 Mannheim (DE); SIERAKOWSKI, Claudia, 64342 Seeheim-Jugenheim (DE)
(86) Internationale Anmeldenummer: PCT/EP2007/058220
(87) Internationale Veröffentlichungsnummer: WO 2008/022923

(56) Entgegenhaltungen:
- EP-A- 0 359 034
- WO-A-87/05924
- JP-A- 8 217 986
- US-A- 4 481 125
- US-A- 5 798 147
- HAYS B G: "SURFACE TREATMENT OF ORGANIC PIGMENTS FOR PRINTING INK APPLICATIONS" AMERICAN INKMAKER, MACNAIR-DORLAND, NEW YORK, NY, US, Bd. 62, Nr. 6, Juni 1984 (1984-06), Seiten 28-50, XP009045503 ISSN: 0002-8916

## Beschreibung

Die vorliegende Beschreibung betrifft feste Pigmentzubereitungen, enthaltend als wesentliche Bestandteile
(A) mindestens ein organisches Pigment,
(B) mindestens ein Polyisobutenderivat mit mindestens einer stickstoffhaltigen Endgruppe
   und
(C) mindestens ein nichtionisches oberflächenaktives Additiv auf Basis von Polyethern.

Weiterhin betrifft die Erfindung die Herstellung dieser Pigmentzubereitungen und ihre Verwendung zur Einfärbung von hochmolekularen organischen Materialien natürlicher und synthetischer Herkunft.

Zur Dispergierung von Pigmenten in flüssigen Anwendungsmedien müssen mechanische Kräfte aufgebracht werden, deren Größe von der Benetzbarkeit des Pigments und seiner Affinität zu dem Anwendungsmedium abhängt. Um die Dispergierung zu erleichtern, werden üblicherweise Dispergiermittel eingesetzt, die gleichzeitig auch eine Reagglomeration der Pigmentteilchen sowie eine Flockulatbildung verhindern und die erhaltene Pigmentdispersion zusätzlich stabilisieren sollen.

Aus der WO-A-87/05924 ist die Verwendung von Polyisobutenderivaten zur Dispergierung von Pigmenten in kohlenwasserstoffbasierenden Lösungsmittelsystemen sowie zur Belegung von Pigmenten bekannt. Bei den im Detail beschriebenen Pigmenten handelt es um anorganische Pigmente, Phthalocyanin- und Azopigmente.

In der DE-A-39 13 667 werden feste Pigmentzubereitungen auf Basis von Kupferphthalocyaninpigmenten beschrieben, die neben sulfonsäuregruppenhaltigen Pigmentderivaten Bisamide von Polyisobutenylbernsteinsäure als Dispergiermittel enthalten und zur Herstellung von Druckfarben mit gutem Fließverhalten geeignet sind.

Aus der EP-A-628 612 ist die Verwendung der Reaktionsprodukte von Polyisobutenylsuccinanhydriden und Alkanolaminen zur Herstellung von wäßrigen und nichiwäßrigen Rußdispersionen bekannt.

In der WO-A-2006/050968 werden Offsetdruckfarben auf Basis unverlackter Azopigmente beschrieben, die Polyisobutenderivate mit stickstoffhaltigen Endgruppen als Fließverbesserer enthalten.

Der Erfindung lag die Aufgabe zugrunde, feste Pigmentzubereitungen bereitzustellen, die sich durch vorteilhafte anwendungstechnische Eigenschaften, insbesondere durch ihr Dispergierverhalten und ihre rheologischen und koloristischen Eigenschaften, auszeichnen.

Demgemäß wurden feste Pigmentzubereitungen gefunden, die als wesentliche Bestandteile
(A) mindestens ein organisches Pigment,
(B) mindestens ein Polyisobutenderivat mit mindestens einer stickstoffhaltigen Endgruppe
   und
(C) mindestens ein nichtionisches oberflächenaktives Additiv auf Basis von Polyethern
enthalten.

Als Komponente (A) sind in den erfindungsgemäßen Pigmentzubereitungen organische Pigmente enthalten. Bevorzugt handelt es sich um ein organisches Pigment (A). Besonders bevorzugte Pigmente (A) sind Phthalocyanin- und vor allem Isoindolinpigmente, wobei gelbe Isoindolinpigmente, insbesondere C.I. Pigment Yellow 139 und C.I. Pigment Yellow 185, ganz besonders bevorzugt sind.

Die erfindungsgemäßen Pigmentzubereitungen können Mischungen verschiedener organischer oder verschiedener anorganischer Pigmente oder Mischungen von organischen und anorganischen Pigmenten enthalten. Vorzugsweise basieren sie jedoch auf einem, insbesondere einem organischen, Pigment (A). Diese bevorzugten erfindungsgemäßen Pigmentzubereitungen können daher auch als mit Polyisobutenderivaten (B) und nichtionischen oberflächenaktiven Additiven (C) belegte Pigmente bezeichnet werden.

Die Pigmente (A) liegen in feinverteilter Form vor. Dementsprechend haben sie üblicherweise mittlere Teilchengrößen von 0,01 bis 5 µm.

Wenn bei der Pigmentsynthese bereits ein Pigment mit der gewünschten Teilchenform erhalten wird, kann dieses direkt als Pigment (A) eingesetzt werden. Andernfalls muß das anfallende Rohpigment einer zusätzlichen Pigmentformierung unterzogen werden.

Als Komponente (B) enthalten die erfindungsgemäßen Pigmentzubereitungen Polyisobutenderivate mit mindestens einer stickstoffhaltigen Endgruppe.

Der Polyisobutenrest der Komponenten (B) kann linear, verzweigt oder sternförmig aufgebaut sein und ein oder mehrere stickstoffhaltige Endgruppen aufweisen. Umgekehrt können auch eine oder mehrere Polyisobutengruppen an eine stickstoffhaltige Endgruppe gebunden sein. Bevorzugt handelt es sich um ein Polyisobutenderivat, das eine stickstoffhaltige Endgruppe pro Polyisobutengruppe aufweist.

Der Polyisobutenrest kann dabei nur aus Isobuteneinheiten aufgebaut sein oder auch Comonomere enthalten, deren Anteil in der Regel ≤ 20 Gew.-%, bevorzugt ≤ 10 Gew.-% und besonders bevorzugt ≤ 5 Gew.-% beträgt. Beispiele für solche Comonomere sind z.B. Vinylaromaten, wie Styrol und C₁-C₄-Alkylstyrole, wie 2-, 3- und 4-Methylstyrol und 4-tert.-Butylstyrol, Isoolefine mit 5 bis 10 C-Atomen, wie 2-Methyl-buten-1, 2-Methylpenten-1, 2-Methylhexen-1, 2-Ethylpenten-1, 2-Ethylhexen-1 und 2-Propylhepten-1, und 1-Buten und cis- und trans-2-Buten. Derartige Comonomere können in technischem Isobuten enthalten sein.

Der Polyisobutenrest der Komponenten (B) weist in der Regel ein mittleres Molekulargewicht Mₙ von 150 bis 10 000, bevorzugt von 200 bis 6 000, besonders bevorzugt von 300 bis 4 000 und ganz besonders bevorzugt von 400 bis 3 000 auf.

Die stickstoffhaltigen Endgruppen der Polyisobutenderivate (B) können ein oder mehrere, vor allem 1 bis 10, Stickstoffatome enthalten. Vorzugsweise liegen die Stickstoffatome in Form von primären, sekundären und/oder tertiären Aminogruppen vor, sie können jedoch auch als Amidgruppen in die Endgruppen eingebaut sein. Besonders bevorzugt leiten sich die stickstoffhaltigen Endgruppen von geradkettigen oder verzweigten Polyalkylenpolyaminen ab. Die stickstoffhaltigen Endgruppen können auch weitere funktionelle Gruppen, insbesondere sauerstoffhaltige funktionelle Gruppen, wie Hydroxyl- oder Ethergruppen, enthalten, vorzugsweise sind sie jedoch nur durch Aminogruppen funktionalisiert.

Besonders bevorzugte Polyisobutenderivate (B) sind die Umsetzungsprodukte von Polyisobutenylsuccinanhydriden (PIBSA) mit Ammoniak oder insbesondere Aminen.

Die als Edukte für diese Komponenten (B) dienenden Polyisobutenylsuccinanhydride können durch Umsetzung von hochreaktiven Polyisobutenen, d.h. Polyisobutenen mit einem besonders hohen Anteil (vorzugsweise ≥ 85%) von α-Olefin-Endgruppen, mit Maleinsäureanhydrid hergestellt werden.

Unter diesen PIBSA-Umsetzungsprodukten besonders bevorzugt sind Polyisobutenylsuccinimide (PIBSI) der Formel I 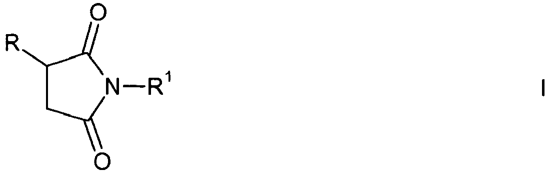 die durch Umsetzung von PIBSA mit Ammoniak oder primären Aminen H₂NR¹ (insbesondere Di- oder Polyaminen) zu erhalten sind.

R entspricht hierbei den oben beschriebenen Polyisobutenresten.

R¹ bedeutet Wasserstoff oder vorzugsweise einen Kohlenwasserstoffrest, der eine endständige Aminogruppe aufweist und aliphatisch oder aromatisch sein kann.

Besonders bevorzugt bedeutet R¹ einen aliphatischen Kohlenstoffrest mit 1 bis 60 C-Atomen, inbesondere 2 bis 30 C-Atomen und vor allem 2 bis 16 C-Atomen.

Beispiele für besonders geeignete Reste R¹ sind geradkettige oder verzweigte ω-Aminoalkylengruppen, wie ω-Aminomethylen, -ethylen, -propylen, -butylen, -pentylen und -hexylen.

Die Kohlenstoffkette ganz besonders geeigneter Reste R¹ ist durch ein oder mehrere Aminofunktionen -NR²- unterbrochen, wobei R² C₁-C₆-Alkyl oder vor allem Wasserstoff bedeutet.

Solche Reste R¹ weisen z.B. folgende Struktur auf:

-(CH₂)ₓ-NH-((CH₂)_{y}-NH]_{z}-(CH₂)ₓ-NR³R⁴

wobei x und y unabhängig voneinander für 1 bis 6, bevorzugt für 2 bis 4, besonders bevorzugt für 2 oder 3, und z für 0 bis 8 stehen und R³ und R⁴ unabhängig voneinander Wasserstoff oder C₁-C₆-Alkyl, bevorzugt Wasserstoff oder Methyl und besonders bevorzugt Wasserstoff bedeuten.

Besonders bevorzugte Reste R¹ leiten sich dabei von Polyalkylenpolyaminen, vor allem Polyethylenpolyaminen und Polyethyleniminen, ab.

Als Beispiele für besonders geeignete niedermolekulare mehrwertige Aminoreste R¹ seien die sich von den folgenden Aminen ableitenden Reste genannt: Diethylentriamin, Triethylentetramin und Pentaethylentetramin.

Beispiel für einen ganz besonders bevorzugten Rest R¹ ist

-CH₂-CH₂-NH-CH₂-CH₂-NH-CH₂-CH₂-NH-CH₂-CH₂-NH₂

Die Reste R¹ können auch noch weitere funktionelle Gruppen, insbesondere Hydroxy- und/oder Ethergruppen, umfassen. Bevorzugt sind sie jedoch nur durch Aminogruppen funktionalisiert.

Selbstverständlich können auch Mischungen verschiedener Polyisobutylensuccinimide I oder Mischungen der Polyisobutylensuccinimide I mit weiteren stickstoffhaltigen Polyisobutylenderivaten als Komponente (B) eingesetzt werden.

Weitere als Komponente (B) geeignete Umsetzungsprodukte von PIBSA mit Aminen sind die nachfolgend aufgeführten Verbindungen, die durch Variation der Reaktionsbedingungen gezielt hergestellt werden können, aber auch als Nebenprodukte in den Polyisobutylensuccinimiden I enthalten sein können:

Polyisobutylensuccinamidsäuren der Formel II 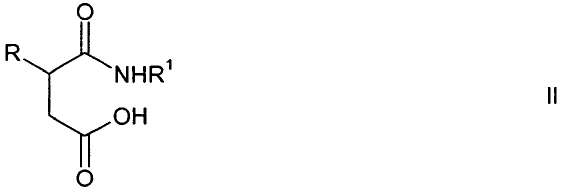 die intermediär auch bei der äquimolaren Umsetzung von PIBSA mit primären Aminen zu den Polyisobutylensuccinimiden I entstehen,

Polyisobutylensuccinamide der Formel III 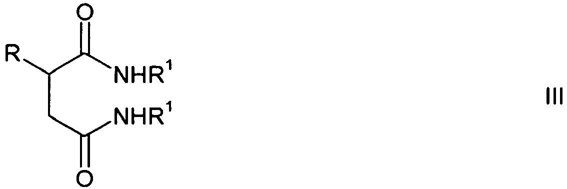 die als Hauptprodukte bei der Umsetzung von PIBSA mit der doppelten molaren Menge Amin (primäre oder auch sekundäre Amine) entstehen,
sowie auch Di-Sccinimide der Formel IV 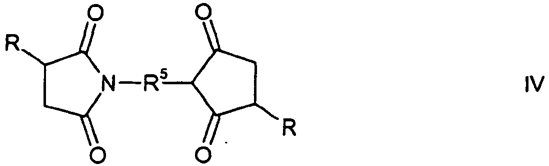 wobei R⁵ einen von den Resten R² abgeleiteten Rest darstellt, der über eine Aminogruppe in den zweiten Succinimidring eingebaut ist.

Weiterhin können als Polyisobutenderivate (B) auch Mannich-Addukte eingesetzt werden, die durch Umsetzung von Polyisobutenylphenolen mit Formaldehyd oder einem Formaldehyd-Oligomer oder -Polymer und mindestens einwertigen primären oder sekundären Aminen zu erhalten sind.

Bevorzugt sind jedoch die Polyisobutenylsuccinimide I als Komponente (B) in den erfindungsgemäßen Pigmentzubereitungen enthalten.

Einzelheiten zu den Polyisobutenderivaten (B) und ihrer Herstellung sind der WO-A-2006/050968 und der dort zitierten Literatur zu entnehmen.

Als weitere Komponente (C) enthalten die erfindungsgemäßen Pigmentzubereitungen nichtionische oberflächenaktive Additive, die auf Polyethem (Polyalkylenoxiden) basiesem.

Neben den ungemischten Polyalkylenoxiden, bevorzugt C₂-C₄-Alkylenoxiden und phenylsubstituierten C₂-C₄-Alkylenoxiden, insbesondere Polyethylenoxiden, Polypropylenoxiden und Poly(phenylethylenoxiden), sind auch Blockcopolymerisate, insbesondere Polypropylenoxid- und Polyethylenoxidblöcke oder Poly(phenylethylenoxid)- und Polyethylenoxidblöcke aufweisende Polymerisate, sowie statistische Copolymerisate dieser Alkylenoxide als Additiv (C) geeignet.

Die Polyalkylenoxide können durch Polyaddition der Alkylenoxide an Startermoleküle, wie gesättigte oder ungesättigte aliphatische und aromatische Alkohole, gesättigte oder ungesättigte aliphatische und aromatische Amine, gesättigte oder ungesättigte aliphatische Carbonsäuren und Carbonsäureamide sowie aromatische Carbonsäureamide und Sulfonsäureamide, hergestellt werden. Die aromatischen Startermoleküle können dabei durch C₁-C₂₀-Alkyl oder C₇-C₃₀-Aralkyl substituiert sein. Üblicherweise werden 1 bis 300 mol, bevorzugt 3 bis 150 mol, Alkylenoxid je mol Startermolekül eingesetzt, im Fall aromatischer Startermoleküle liegen die Alkylenoxidmengen vor allem bei 2 bis 100 mol, vorzugsweise bei 5 bis 50 mol und insbesondere bei 10 bis 30 mol. Die Polyadditionsprodukte können eine terminale OH-Gruppe aufweisen oder endgruppenverschlossen sein, z.B. als C₁-C₆-Alkylether, vorliegen.

Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol (Cetylalkohol), 2-Hexyldecanol, Heptadecanol, Octadecanol (Stearylalkohol), 2-Heptylundecanol, 2-Octyldecanol, 2-Nonyltridecanol, 2-Decyltetradecanol, Oleylalkohol und 9-Octadecenol sowie auch Mischungen dieser Alkohole, wie C₈/C₁₀-, C₁₃/C₁₅- und C₁₆/C₁₈-Alkohole, und Cyclopentanol und Cyclohexanol genannt. Von besonderem Interesse sind die gesättigten und ungesättigten Fettalkohole, die durch Fettspaltung und Reduktion aus natürlichen Rohstoffen gewonnen werden, und die synthetischen Fettalkohole aus der Oxosynthese. Die Alkylenoxidaddukte an diese Alkohole weisen üblicherweise mittlere Molekulargewichte Mₙ von 200 bis 5 000, vorzugsweise von 200 bis 1 000, auf.

Als Beispiele für die obengenannten aromatischen Alkohole seien neben unsubstituiertem Phenol und α- und β-Naphthol auch die alkylsubstituierten Produkte, die insbesondere durch C₁-C₁₂-Alkyl, vorzugsweise C₄-C₁₂- bzw. C₁-C₄-Alkyl, substituiert sind, und die aralkylsubstituierten Produkte, insbesondere C₇-C₃₀-aralkylsubstituiertes Phenol, wie Hexylphenol, Heptylphenol, Octylphenol, Nonylphenol, Isononylphenol, Undecylphenol, Dodecylphenol, Di- und Tributylphenol und Dinonylphenol, sowie Bisphenol A und seine Umsetzungsprodukte mit Styrol, vor allem in den ortho-Positionen zu beiden OH-Gruppen durch insgesamt 4 Phenyl-1-ethylreste substituiertes Bisphenol A, genannt.

Geeignete aliphatische Amine entsprechen den oben aufgeführten aliphatischen Alkoholen. Besondere Bedeutung haben auch hier die gesättigten und ungesättigten Fettamine, die vorzugsweise 14 bis 20 C-Atome aufweisen. Als aromatische Amine seien beispielsweise Anilin und seine Derivate genannt.

Als aliphatische Carbonsäuren eignen sich insbesondere gesättigte und ungesättigte Fettsäuren, die bevorzugt 14 bis 20 C-Atome enthalten.

Geeignete Carbonsäureamide leiten sich von diesen Carbonsäuren ab.

Neben den Alkylenoxidaddukten an einwertige Amine und Alkohole können auch Alkylenoxidaddukte an mindestens bifunktionelle Amine und Alkohole als Additiv (C) eingesetzt werden.

Als mindestens bifunktionelle Amine sind zwei- bis fünfwertige Amine bevorzugt, die insbesondere der Formel H₂N-(R⁶-NR⁷)ₙ-H (R⁶: C₂-C₆-Alkylen; R⁷: Wasserstoff oder C₁-C₆-Alkyl; n: 1 bis 5) entsprechen. Im einzelnen seien beispielhaft genannt: Ethylendiamin, Diethylentriamin, Triethylentetramin, Tetraethylenpentamin, Propylendiamin-1,3, Dipropylentriamin, 3-Amino-1-ethylenaminopropan, Hexamethylendiamin, Dihexamethylentriamin, 1,6-Bis-(3-aminopropylamino)hexan und N-Methyldipropylentriamin, wobei Hexamethylendiamin und Diethylentriamin besonders bevorzugt sind und Ethylendiamin ganz besonders bevorzugt ist.

Die Blockcopolymerisate auf Basis mehrwertiger Amine weisen in der Regel mittlere Molekulargewichte Mₙ von 1 000 bis 40 000, vorzugsweise von 1 500 bis 30 000, auf.

Als mindestens bifunktionelle Alkohole sind zwei- bis fünfwertige Alkohole bevorzugt. Beispielsweise seien C₂-C₆-Alkylenglykole und die entsprechenden Di- und Polyalkylenglykole, wie Ethylenglykol, Propylenglykol-1,2 und -1,3, Butylenglykol-1,2 und -1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Die Blockcopolymerisate auf Basis mehrwertiger Alkohole weisen im allgemeinen mittlere Molekulargewichte Mₙ von 1 000 bis 20 000, vorzugsweise von 1 000 bis 15 000, auf.

Bevorzugte Additive (C) sind die Alkylenoxidaddukte, insbesondere die Ethylenoxidaddukte, an Alkohole oder Amine.

Bei den als Startermolekül eingesetzten Alkoholen oder Aminen handelt es sich insbesondere um natürliche oder synthetische Fettalkohole oder Fettamine. Bevorzugt sind dabei kurzkettige synthetische Fettalkohole (Oxoalkohole) mit 8 bis 18 C-Atomen.

Besonders bevorzugte auf diesen Fettalkoholen basierende Additive (C) enthalten in der Regel 3 bis 11 mol, insbesondere 3 bis 6 mol, Ethylenoxid pro mol Alkohol.

Selbstverständlich können auch Mischungen verschiedener nichtionischer oberflächenaktiver Additive als Komponente (C) zum Einsatz kommen.

Die erfindungsgemäßen Pigmentzubereitungen enthalten in der Regel 60 bis 99 Gew.-%, vor allem 75 bis 98,5 Gew.-%, Pigment (A), 0,5 bis 20 Gew.-%, vorzugsweise 1 bis 10 Gew.-%, Polyisobutenderivat (B) und 0,5 bis 20 Gew.-%, insbesondere 0,5 bis 15 Gew.-%, oberflächenaktives Additiv (C).

Die erfindungsgemäßen Pigmentzubereitungen können vorteilhaft nach dem ebenfalls erfindungsgemäßen Verfahren hergestellt werden, indem man das bei der Pigmentsynthese anfallende Rohpigment (A) in wäßrigem Medium mit dem Polyisobutenderivat (B) und dem oberflächenaktiven Additiv (C) in Kontakt bringt und das mit (B) und (C) belegte Pigment isoliert und trocknet.

Da das bei der Pigmentsynthese anfallende Rohpigment üblicherweise keine für die Anwendung geeigneter Form aufweist, muß es üblicherweise noch einem Formierungsprozeß zur Einstellung der gewünschten Teilchenform und -größe unterzogen werden.

Dieser Formierungsprozeß kann erfindungsgemäß in Gegenwart des Polyisobutenderivats (B) und des oberflächenaktiven Additivs (C) durchgeführt werden, d.h. (B) und (C) können vor oder während dieses Prozesses zugesetzt werden. Es ist jedoch ebenso möglich, die Belegung des Pigments mit (B) und (C) im Anschluß an die Formierung vorzunehmen.

Üblicherweise handelt es sich bei dem Formierungsprozeß um einen Kristallisationsprozeß, der gewünschtenfalls mit einem vorab erfolgenden Zerkleinerungsschritt (Naß- oder Trockenmahlung) des Rohpigments kombiniert werden kann.

Der Kristallisationsprozeß besteht üblicherweise in einer thermischen Behandlung des Rohpigments in einem wäßrigen, wäßrig-organischen oder organischen Medium.

Wenn die erfindungsgemäße Belegung des Pigments (A) mit (B) und (C) als separater Schritt an die Pigmentsynthese oder die Pigmentformierung angeschlossen wird, kann sie ebenfalls in wäßrigem, wäßrig-organischem oder organischem Medium vorgenommen werden. Vorteilhaft erfolgt sie in wäßrigem Medium oder auch in einem mindestens 50 Gew.-% Wasser enthaltenden wäßrig-organischen Medium unter Einsatz des in der Regel als wasserfeuchter Preßkuchen vorliegenden Pigments (A).

Für die Pigmentbelegung wie auch für die Pigmentformierung geeignete organische Lösungsmittel sind z.B. Alkohole, Etheralkohole, Ether, Ketone, Carbonsäureamide und Carbonsäureester sowie deren Mischungen. Im einzelnen seien beispielhaft genannt:
aliphatische und araliphatische, einwertige oder mehrwertige Alkohole mit bis zu 10 Kohlenstoffatomen, wie Methanol, Ethanol, Propanol, Isopropanol, Butanol, Isobutanol, tert.-Butanol, Amylalkohol, Isoamylalkohol, Hexanol, Isohexanol, Heptanol, Octanol, 2-Ethylhexanol, Ethylenglykol, 1,2- und 1,3-Propylenglykol, Cyclohexanol, Methylcyclohexanol, Benzylalkohol und 2-Phenylethanol;
Mono- und Di-C₂-C₃-alkylenglykolmono-C₁-C₄-alkylether, wie Ethylenglykolmonomethyl-, -ethyl- und -butylether und Diethylenglykolmonomethyl- und -ethylether;
acyclische und cyclische aliphatische Ether mit bis zu 10 Kohlenstoffatomen, wie Dipropylether, Diisopropylether, Dibutylether, Diisobutylether, Tetrahydrofuran, Dioxan, Diethylenglykoldimethyl- und -diethylether;
acyclische und cyclische aliphatische und araliphatische Ketone mit bis zu 10 Kohlenstoffatomen, wie Aceton, Methylethylketon, Methylpropylketon, Methylbutylketon, Diethylketon, Methylisopropylketon, Methylisobutylketon, Cyclopentanon, Cyclohexanon, Methylcyclohexanon, Acetophenon und Propiophenon;
Amide und C₁-C₄-Alkylamide von aliphatischen Carbonsäuren mit bis zu 4 Kohlenstoffatomen, wie Formamid, N,N-Dimethyl- und N,N-Diethylformamid, N,N-Dimethyl- und N,N-Diethylacetamid, N,N-Dimethyl- und N,N-Diethylpropionsäureamid und N-Methylpyrrolidon;
Ester aromatischer Carbonsäuren mit insgesamt bis zu 12 Kohlenstoffatomen, wie Phthalsäuredimethylester und Phthalsäurediethylester.

Bevorzugt werden dabei die Lösungsmittel eingesetzt, die sich bei der Aufarbeitung leicht entfernen lassen, z.B. durch Auswaschen mit Wasser, azeotrope Destillation mit Wasser, Wasserdampfdestillation oder durch Trocknen des gesamten Ansatzes.

Besonders bevorzugte Lösungsmittel sind Glykole und deren Mono- und Dialkylether.

Die Belegung des Pigments (A) mit dem Polyisobutenderivat (B) und dem oberflächenaktiven Additiv (C) kann unter Dispergieren des Rohpigments im wäßrigen oder wäßrig-organischen Medium oder auch durch einfaches Verweilenlassen erfolgen. Bevorzugt erfolgt sie in einem Rührkessel bei 35 bis 100°C, vorzugsweise 50 bis 80°C.

Da die Polyisobutenderivate (B) in der Regel wasserunlöslich sind, werden sie vorteilhaft in Form von das oberflächenaktive Additiv (C) enthaltenden Emulsionen in wäßrig-organischem Medium zudosiert. Als organisches Lösungsmittel eignen sich dabei z.B. Kohlenwasserstoffe, wie Isooctan, und Alkylenglykolether, wie Ethylenglykolmonobutylether. Im Rührkessel löst sich die Emulsion, Polyisobutenderivat (B) und teilweise auch das oberflächenaktive Additiv (C) fallen aus, verteilen sich sehr fein in der Pigmentsuspension und führen so zu einer besonders gleichmäßigen Pigmentbelegung.

Das mit (B) und (C) belegte Pigment (A) kann durch Abfiltrieren, Waschen insbesondere mit Wasser und Trocknen isoliert werden. Zweckmäßigerweise wird das getrocknete Produkt einer Desagglomerierungsmahlung z.B. in Rotor-, Zahnkranz- oder Strahlmühlen unterzogen.

Handelt es sich um wasserlösliche Additive (C), so ist darauf zu achten, daß ausreichende Restmengen (in der Regel mindestens 0,5 Gew.-%, bezogen auf die Pigmentzubereitung) im isolierten Produkt verbleiben. Alternativ können auch andere Methoden zur Isolierung des belegten Pigments, wie Sprüh- und Gefriertrocknung, angewandt werden.

Die erfindungsgemäßen Pigmentzubereitungen eignen sich hervorragend zur Einfärbung von hochmolekularen organischen Materialien natürlicher und synthetischer Herkunft.

Als Beispiele für derartige Materialien seien Druckfarben, insbesondere Offsetdruckfarben, Lacke, vor allem Pulverlacke, Tinten, Farbfilter, Kunststoffe und Toner genannt.

Die erfindungsgemäßen Pigmentzubereitungen zeichnen sich dabei durch ihr vorteilhaftes Dispergierverhalten und ihre vorteilhaften rheologischen und koloristischen Eigenschaften aus.

Ihre vorteilhaften Eigenschaften sind im folgenden beispielhaft für einzelne Anwendungen beschrieben.

So werden unter Einsatz der erfindungsgemäßen Pigmentzubereitungen Offsetdruckfarben mit guten anwendungstechnischen Eigenschaften (geringe Neigung zum Aufbrennen auf der Druckwalze und gutes Fließverhalten) erhalten, in denen die Pigmente feinverteilt vorliegen und die Andrucke mit hoher Transparenz und hohem Glanz ergeben.

Bei der Anwendung in Pulverlacken sind insbesondere die Farbstärke sowie vorteilhaftes Dispergierverhalten und vorteilhaftes plate out-Verhalten (d.h., geringe Neigung zur Bildung von Pigmentablagerungen an der Oberfläche des zu lackierenden Mediums und der Maschinen) hervorzuheben.

Bei der Einarbeitung in Kunststoffe zeichnen sich die erfindungsgemäßen Pigmentzubereitungen vor allem durch ihre Farbstärke und ihre Migrationsstabilität aus.

### Beispiele

### A. Herstellung von erfindungsgemäßen Pigmentzubereitungen

### A.1. Herstellung von Polyisobutenderivat (B) und oberflächenaktives Additiv (C) enthaltenden Mikroemulsionen

Als Polyisobutenderivat (B) wurde ein Polyisobutenylsuccinimid, basierend auf Polyisobuten mit einem mittleren Molekulargewicht Mₙ von 1 000 und Tetraethylenpentamin (Polymer A der WO-A-2006/050968), eingesetzt.

### Emulsion 1:

14,6 g Polyisobutenderivat (B) wurden in eine auf 60°C erwärmte Mischung von 52,0 g Ethylenglykolmonobutylether und 27,0 g eines ethoxylierten Isodecanols (3,5 mol EO/mol) eingetragen, 10 min gerührt und mit 6,0 g Wasser versetzt. Die nach Homogenisieren erhaltene Emulsion wurde direkt zur Pigmentbelegung eingesetzt.

### Emulsion 2:

14,6 g Polyisobutenderivat (B) wurden unter Erwärmen in 22,0 g Isooctan gelöst und unter Rühren mit 27,0g eines ethoxylierten Isodecanols (5 mol EO/mol) versetzt. Die nach Erwärmen auf 50°C erhaltene Emulsion wurde direkt zur Pigmentbelegung eingesetzt.

### A.2. Herstellung der Pigmentzubereitungen

### Beispiel 1

100 g eines wasserfeuchten Preßkuchens von C.I. Pigment Yellow 185 (Trockengehalt etwa 50 Gew.-%; hergestellt gemäß Beispiel 1 der DE-A-29 14 086) wurden in 500 ml 1 h homogen suspendiert. Dann wurden 21,3 g der Emulsion 1 in etwa 20 min zugetropft. Die erhaltene Mischung wurde 1 h bei 60°C gerührt.

Das belegte Pigment wurde dann über eine Nutsche mit Filterpapier abfiltriert und mit 3 I Wasser gewaschen (Leitfähigkeit des ablaufenden Wassers < 100 µS). Der feuchte Preßkuchen wurde im Umlufttrockenschrank bei 90°C 24 h getrocknet und anschlie-βend zur Desagglomerierung in einer Labormühle gemahlen.

Es wurden 47,8 g gelbes Pigmentpulver erhalten.

### Vergleichsbeispiel V1

Es wurde analog Beispiel 1 vorgegangen, jedoch wurden anstelle der Emulsion 1 eine Lösung von 5,0 g des Polyisobutenderivats (B) in 10 ml Ethylenglykolmonobutylether eingesetzt.

Es wurden 50 g gelbes Pigmentpulver erhalten.

### Vergleichsbeispiel V2

Es wurde analog Beispiel 1 vorgegangen, jedoch wurden anstelle der Emulsion 1 7,4 g des ethoxylierten Isodecanols (3,5 mol EO/mol) eingesetzt.

Es wurden 48 g gelbes Pigmentpulver erhalten.

### Beispiel 2

In einem Druckkessel mit Ankerrührer wurden 113,3 g Barbitursäure und 72,3 g Ameisensäure in 1 000 I Wasser gelöst und 10 min gerührt. Nach Zugabe von 64,6 g Diiminoisoindolin in 130 ml Methanol wurde die Mischung in 2 h auf 96°C erhitzt und unter Eigendruck (ca. 1,3 bar) 2 h gerührt.

Nach Abkühlen auf etwa 65°C wurde die Suspension mit 320 ml Wasser verdünnt und weitere 30 min bei 65°C gerührt. Das erhaltene Pigment wurde abfiltriert und mit warmem Wasser elektrolytfrei gewaschen (Leitfähigkeit des ablaufenden Wassers < 200 µS) und in Form des erhaltenen Preßkuchens der Pigmentformierung zugeführt (Ausbeute 540 g, Trockengehalt 27 Gew.-%).

Dazu wurden 210 g des Preßkuchens in 500 ml Wasser suspendiert, in 2 h auf 98°C erhitzt und 2 h bei dieser Temperatur gerührt. Nach Abkühlen der Suspension auf etwa 80°C durch Zugabe von 300 ml Wasser wurde das formierte Pigment abfiltriert und mit 60°C warmem Wasser elektrolytfrei gewaschen. Der erhaltene Preßkuchen (Ausbeute 230 g, Trockengehalt 24 Gew.-%) wurde dann unter Verwendung der Emulsion 2 in eine erfindungsgemäße Pigmentzubereitung überführt.

Dazu wurde der erhaltene Presskuchen in 500 ml Wasser suspendiert und 90 min bei 60°C durch Rühren homogenisiert. Dann wurden 11,8 g der Emulsion 2 zugetropft. Die erhaltene Mischung wurde 1 h bei 60°C gerührt.

Das belegte Pigment wurde dann über eine Nutsche mit Filterpapier abfiltriert und mit 3 I Wasser gewaschen. Der feuchte Preßkuchen wurde im Vakuumtrockenschrank bei 115°C 12 h getrocknet und anschließend zur Desagglomerierung in einer Labormühle gemahlen.

Es wurden 57 g gelbes Pigmentpulver erhalten.

### B. Prüfung von erfindungsgemäßen Pigmentzubereitungen in Offsetdruckfarben

Zur Prüfung ihrer anwendungstechnischen Eigenschaften im Druck wurden die erhaltenen Pigmentzubereitungen zu Offsetdruckfarben verarbeitet.

Dazu wurden jeweils 20 g Pigmentzubereitung in 80 g eines Offsetfirnis (40 Gew.-% kolophoniummodifiziertes Phenolharz, 27 Gew.-% Lackleinöl und 33 Gew.-% Mineralöl 300°C) eingerührt und dann mit einem Dissolver (Dispermat^{®}, Fa. Getzmann; Zahnscheibendurchmesser 3 cm, 12 000 U/min) 20 min bei 50°C vordispergiert. Anschlie-βend wurde die erhaltene Paste auf einem auf 35°C temperierten Dreiwalzenstuhl SDY 200 (Fa. Bühler) in 3 Passagen bei 10 bar Anpreßdruck angerieben.

Die Bestimmung der koloristischen Eigenschaften (Farbstärke (Angabe der Färbeäquivalente) sowie Farbton (Farbwinkel Hue[°] und Farbtonreinheit (Chroma C*)) erfolgte in der Weißaufhellung an Naßrakelungen (Methode A) sowie im Andruck (Methode B).

### Methode A:

Zur Prüfung der koloristischen Eigenschaften in der Weißaufhellung wurden 0,35 g der jeweiligen Buntpaste mit 10 g einer 40 gew.-%ig pigmentierten Weißpaste auf einem Tellerreiber JEL 25/53 (Fa. Engelsmann) durch 4 x 35 Umdrehungen gemischt und mit einer 100 µm-Lackhantel auf weißen Iconorex-Karton aufgezogen und sofort farbmetrisch ausgewertet.

### Methode B:

Zur Prüfung der koloritischen Eigenschaften im Andruck wurden mit der jeweiligen Buntpaste auf einem Andruckgerät (Fa. Prüfbau) 4 cm breite Druckstreifen mit einem Farbauftrag von 12,0 mg ± 0,4 mg (entspricht ca. 1,5 g/m²) auf APCO II/II-Papier hergestellt (Temperatureinstellung 23°C, Anpreßdruck 250N/cm, Druckform Metall-Vollton, Verreibe- und Einfärbezeit 30 s, Geschwindigkeit 0,5 m/s). Die Streifen wurden spätestens 10 min nach dem Andruck 30 min bei 60°C im Trockenschrank getrocknet und unmittelbar danach farbmetrisch ausgewertet.

Die farbmetrische Auswertung (Bestimmung von Hue [°] und Chroma C*) der Naßrakelungen (Methode A) wie auch der Andrucke (Methode B) erfolgte mit einem Spektralphotometer X-Rite 968 (Fa. X-Rite) in Verbindung mit der BCSWIN-Software nach Angleichen der Farbtiefe auf 1/9 Standardfarbtiefe (Methode A) bzw. 1/1 Standardfarbtiefe (Methode B) nach DIN 6174 (Normlichtart D 65, 10° Normalbetrachter).

Bei der Bestimmung der Farbstärke wurde den Naßrakelungen bzw. Andrucken auf Basis von jeweils analog hergestellten, jedoch unbelegten Pigmenten (Standard 1 bzw. Standard 2) der FAE-Wert 100 (Standard) zugeordnet. FAE-Werte < 100 bedeuten eine höhere Farbstärke als beim Standard, FAE-Werte > 100 entsprechend eine kleinere Farbstärke.

Die Bestimmung des Glanzes erfolgte durch Vermessen der Andrucke mit einem Glanzmeßgerät Multigloss (Fa. Byk-Gardner) bei einem Meßwinkel von 60°.

Zur Bestimmung der Transparenz wurde die Differenz der Lichtreflexion eines Andrucks (1,5 g/m²) auf schwarzem Karton gegen schwarzen Untergrund als Streu-Delta-E-Wert (Streu-DE-Auswertung nach DIN 6174 gegenüber Idealschwarz) gemessen. Je kleiner die Differenz und damit auch der Streu-Delta-E-Wert ist, umso weniger wird der Untergrund abgedeckt, und umso transparenter ist der Druck.

Zur Beurteilung des Dispergierverhaltens wurde die Kornfeinheit von Anreibungen der Buntpasten untersucht, die auf dem oben beschriebenen Dreiwalzenstuhl nach 1, 3 und 6 Passagen und einem Anpreßdruck von 10 bar erhalten wurden. Die Auswertung erfolgte visuell unter dem Lichtmikroskop nach einer Skala von 1 (schlecht; Agglomerate von > 100 µm) bis 7 (sehr gut; Agglomerate < 5 µm).

Zur Bestimmung des rheologischen Verhaltens wurden Fließgrenze, Viskosität und Thixotropie der Buntpasten mit einem Rheometer Rotovisko (Fa. Thermo Electron) bei 25°C bestimmt.

Die Ergebnisse dieser Untersuchungen sind in Tabelle 1 (koloristische Eigenschaften) und Tabelle 2 (Kornfeinheit und rheologische Eigenschaften) zusammengestellt. Zum Vergleich sind dabei auch die mit dem jeweiligen unbelegten Pigment (Standard 1 bzw. Standard 2) sowie das nur mit dem Polyisobutenderivat (B) belegte Pigment V1 und das nur mit oberflächenaktiven Additiv (C) belegte Pigment V2 aufgeführt.

**Tabelle 1**

| Pigmentzubereitung (Bsp.) | FAE | | Hue [°] | | C* | | Glanz | Streu-DE |
|---|---|---|---|---|---|---|---|---|
| | A | B | A | B | A | B | | |
| 1 | 114 | 97 | 98,5 | 93,9 | 56,8 | 112,7 | 81 | 18,4 |
| V1 | 97 | 86 | 98,1 | 93,8 | 58,2 | 112,8 | 63 | 17,7 |
| V2 | 99 | 88 | 98,4 | 93,6 | 57,7 | 113,9 | 82 | 17,6 |
| Standard 1 | 100 | 100 | 97,5 | 93,2 | 57,0 | 112,3 | 62 | 17,5 |
| | | | | | | | | |
| 2 | 110 | 115 | 80,3 | 83,0 | 57,3 | 109,3 | 73 | 12,6 |
| Standard 2 | 100 | 100 | 79,9 | 81,4 | 58,0 | 115,2 | 74 | 12,8 |

**Tabelle 2**

| Pigmentzubereitung (Bsp.) | Kornfeinheit | | | Fließgrenze [Pa] | Viskosität [Pa s] | Thixotropie [Pa/s] |
|---|---|---|---|---|---|---|
| | 1 Pass. | 3 Pass. | 6 Pass. | | | |
| 1 | 3-4 | 5-6 | 6 | 30 | 65 | 1400 |
| V1 | 4 | 4 | 4-5 | 31 | 140 | 10100 |
| V2 | 2-3 | 4-5 | 5-6 | 300 | 80 | 6200 |
| Standard 1 | 2 | 4 | 4 | 200 | 120 | 5000 |
| | | | | | | |
| 2 | 6 | 6-7 | 6-7 | 35 | 65 | 2500 |
| Standard 2 | 3-4 | 5 | 5 | 140 | 85 | 4100 |

## Patentansprüche

1. Feste Pigmentzubereitungen, enthaltend als wesentliche Bestandteile
(A) mindestens ein organisches Pigment,
(B) mindestens ein Polyisobutenderivat mit mindestens einer stickstoffhaltigen Endgruppe und
(C) mindestens ein nichtionisches oberflächenaktives Additiv auf Basis von Polyethem.

2. Pigmentzubereitungen nach Anspruch 1, die als Komponente (B) die Umsetzungsprodukte von Polyisobutenylsuccinanhydriden mit Ammoniak oder Aminen enthalten.

3. Pigmentzubereitungen nach Anspruch 1 oder 2, die als Komponente (B) die Umsetzungsprodukte von Polyisobutenylsuccinanhydriden mit Polyaminen enthalten.

4. Pigmentzubereitungen nach den Ansprüchen 1 bis 3, die als Komponente (C) Alkylenoxidaddukte an Alkohole oder Amine enthalten.

5. Pigmentzubereitungen nach den Ansprüchen 1 bis 4, die als Komponente (A) Isoindolinpigmente enthalten.

6. Verfahren zur Herstellung von Pigmentzubereitungen gemäß den Ansprüchen 1 bis 5, **dadurch gekennzeichnet, dass** man das bei der Pigmentsynthese anfallende Rohpigment (A) in wässrigem Medium mit dem Polyisobutenderivat (B) und dem oberflächenaktiven Additiv (C) in Kontakt bringt und das mit (B) und (C) belegte Pigment isoliert und trocknet.

7. Verfahren nach Anspruch 6, **dadurch gekennzeichnet, dass** man das Rohpigment (A) zusätzlich einer Pigmentformierung unterzieht und das Polyisobutenderivat (B) und das oberflächenaktive Additiv (C) vor, während oder nach der Pigmentformierung zugibt.

8. Verfahren nach Anspruch 6 oder 7, **dadurch gekennzeichnet, dass** man das Polyisobutenderivat (B) in Form einer das oberflächenaktive Additiv (C) enthaltenden Emulsion in wässrig-organischem Medium einsetzt.

9. Verwendung von Pigmentzubereitungen gemäß den Ansprüchen 1 bis 5 zur Einfärbung von hochmolekularen organischen Materialien natürlicher und synthetischer Herkunft.

10. Verwendung nach Anspruch 9, **dadurch gekennzeichnet, dass** es sich bei den hochmolekularen Materialien um Druckfarben, Lacke, Tinten, Farbfilter, Kunststoffe und Toner handelt.

## Claims

1. A solid pigment preparation comprising as essential constituents
(A) at least one organic pigment,
(B) at least one polyisobutene derivative having at least one nitrogenous end group and
(C) at least one nonionic surface-active additive based on a polyether.

2. The pigment preparation according to claim 1 wherein said component (B) comprises a reaction product of a polyisobutenylsuccinic anhydride with ammonia or an amine.

3. The pigment preparation according to claim 1 or 2 wherein said component (B) comprises a redaction product of a polyisobutenylsuccinic anhydride with a polyamine.

4. The pigment preparation according to claims 1 to 3 wherein said component (C) comprises an alkylene oxide adduct with an alcohol or with an amine.

5. The pigment preparation according to claims 1 to 4 wherein said component (A) comprises an isoindoline pigment.

6. A process for producing a pigment preparation according to claims 1 to 5, which comprises contracting the as-synthesized crude pigment (A) in an aqueous medium with said polyisobutene derivative (B) and said surface-active additive (C) and the (B)- and (C)-coated pigment being isolated and dried.

7. The process according to claim 6 wherein said crude pigment (A) is additionally subjected to a pigment-finishing step and said polyisobutene derivative (B) and said surface-active additive (C) are added before, during or after said pigment-finishing step.

8. The process according to claim 6 or 7 wherein said polyisobutene derivative (B) is utilized in the form of an emulsion in an aqueous-organic medium comprising said surface-active addictive (C).

9. The use of a pigment preparation according to claims 1 to 5 for coloration of macromolecular organic materials of natural and synthetic origin.

10. The use according to claim 9 wherein said macromolecular materials comprise pointing inks, coatings, liquid inks, color filters, plastics and toners.

## Revendications

1. Compositions solides de pigments, contentant comme composants essentiels
(A) au moins un pigment organique,
(B) au moins un dérivé de polyisobutène comportant au moins un groupe terminal azoté et
(C) au moins un additif tensioactif non ionique à base de polyéthers.

2. Compositions de pigments selon la revendication 1, qui contiennent en tant que composant (B) les produits de réaction de poly(anhydride isobuténylsuccinique)s avec l'ammoniac ou des amines.

3. Compositions de pigmente selon la revendication 1 ou 2, qui contiennent en tant que composant (B) les produits de réaction de poly(anhydride isobuténylsuccinique)s avec des polyamides.

4. Compositions de pigments selon les revendications 1 à 3, qui contiennent en tant que composant (C) des adduits d'oxyde d'alkylène sur des alcools ou des amines.

5. Compositions de pigments selon les revendications 1 à 4, qui contiennent en tant que composant (A) des pigments iso-indoline.

6. Procécé pour la préparation de compositions de pigments selon les revendications 1 à 5, **caractérisé en ce qu'**on met en contact le pigment brut (A), produit lors de la synthèse de pigment, en milieu aqueux, avec le dérivé de polyisobutène (B) et l'additif tensioactif (C) et on isole et sèche le pigment muni de (B) et (C).

7. Procécé selon la revendication 6, **caractérisé en ce qu'**en outre on soumet le pigment brut (A) à une mise en forme et on ajoute le dérivé de polyisobutène (B) et l'additif tensioactif (C) avant, pendant ou après la mise en forme du pigment.

8. Procédé selon la revendication 6 ou 7, **caractérisé en ce qu'**on utilise le dérivé de polyisobutène (B) sous forme d'une émulsion contenant l'additif tensioactif (C) en milieu aqueux-organique.

9. Utilisation de compositions de pigments selon les revendications 1 à 5 pour la chloration de matières organiques de masse moléculaire élevée, d'origine naturelle et synthétique.

10. Utilisation selon la revendication 9, **caractérisée en ce que** les matières de masse moléculaire élevée consistent en des encres d'impression, des peintures, des encres, des filtres colorés, des matières plastiques et des toners.
